# EUROPÄISCHE PATENTANMELDUNG

(11) **EP 1 816 546 A1**
(43) Veröffentlichungstag der Anmeldung: **08.08.2007**
(21) Anmeldenummer: 06000537.8
(22) Anmeldetag: 11.01.2006
(51) Int. Cl.: G06F 3/023

(54) **Verfahren zur Verschiebung einer Tastenfunktion**

(71) Anmelder: SIEMENS AKTIENGESELLSCHAFT, 80333 München (DE)
(72) Erfinder: Bischoff, Toni Gerhard, 91580 Petersaurach (DE)

(57) **Zusammenfassung**

Die Erfindung betrifft ein Verfahren zur Verschiebung einer Tastenfunktion einer ersten Taste auf eine zweite Taste einer Tastatur, mit mehreren Tasten, deren Tastenfunktionen an zugeordneten Speicherplätzen eines Speichers abgespeichert sind. Die Tastenfunktion wird hierzu mit Hilfe einer oder mehrerer anderer Tasten zunächst kopiert und an einem der zweiten Taste zugeordneten Speicherplatz eingefügt.

## Beschreibung

Die Erfindung betrifft ein Verfahren zur Verschiebung einer Tastenfunktion einer ersten Taste einer mit mehreren Tasten versehenen Tastatur, deren Tastenfunktionen an zugeordneten Speicherplätzen eines Speichers abgespeichert sind, auf eine zweite Taste der Tastatur.

Die Tasten von Tastaturen z.B. von heutigen Push-Button-Panels, Operator-Panels aber auch Touch Panels haben ihnen zugeordnete Tastenfunktionen. Bei einem Defekt einer Taste muss das komplette Panel ausgetauscht werden. Das neue Panel muss erst bestellt werden und oft vergeht viel Zeit bis zum Austausch.

Bei projektierbaren Panels konnte bisher eine Tastenfunktion auf eine andere Taste gelegt werden, wenn:
1. der Kunde einen Rechner mit der Projektierungssoftware zur Verfügung hat,
2. das Quellprogramm vorlag und
3. zur Durchführung ein geeigneter Fachmann zur Verfügung stand.

Bei z.B. Push-Button-Panels gab es nur die Abhilfe, sich ein Ersatzgerät auf Lager zu halten. Das Panel konnte nur mit entsprechend technisch qualifiziertem Personal ausgetauscht werden.

Der Erfindung liegt daher die Aufgabe zugrunde, ein Verfahren der oben genannten Art vorzuschlagen, mit dem auf einfache Weise eine Verschiebung der Tastenfunktion möglich ist.

Diese Aufgabe wird gelöst durch ein Verfahren mit den Merkmalen nach Anspruch 1. Dabei ist zumindest für den Notbetrieb keine Ersatztastatur erforderlich, wenn z.B. eine Taste defekt ist und somit die zugehörige Tastenfunktion nicht mehr verwendbar ist.

Vorteilhafte Weiterbildungen der Erfindung sind den Unteransprüchen zu entnehmen.

Ein besonderer Vorteil besteht, wenn die Tastenfunktionen der Tasten, deren Verschiebung ermöglicht wird, in dem Speicher an den Tasten zugeordneten Speicherplätzen als Ring abgespeichert sind, so dass jede Tastenfunktion benachbart zu beiden Seiten von mindestens einer anderen Tastenfunktion umgeben ist. Diese Anordnung ermöglicht einen eindeutigen Kopierbefehl festzulegen, nach dem die Tastenfunktion der ersten Taste verschoben werden soll.

Dabei ist es besonders vorteilhaft, wenn der Kopierbefehl durch die beiden zu den unmittelbar benachbarten Tastenfunktionen zugehörigen Tasten ausgelöst wird.

Der Kopierbefehl wird auch dadurch besonders gekennzeichnet, dass nach Anspruch 4 die beiden Tasten mindestens für eine vorbestimmte Dauer gleichzeitig gedrückt werden.

Es ist weiterhin vorteilhaft, wenn im Anschluss die zweite Taste gedrückt wird und daraufhin ein dieser zugeordneter Speicherplatz im Speicher die zu verschiebende Tastenfunktion übernimmt.

Wird zur Beschriftung der Tasten ein Display verwendet und wird mit der Verschiebung der Tastenfunktion die Beschriftung der zweiten Taste geändert, so kann auf eine aufwändige nachträgliche Änderung der Tastenbeschriftung verzichten werden.

Besonders einfach ist es, wenn ein OLED(**O**rganic **L**ight **E**mitting **D**iode)-Display die verwendet wird.

Weiterhin ist es vorteilhaft, wenn die Verschiebung der Tastenfunktion z.B. nach Beheben eines Defekts der ersten Taste durch gleichzeitiges Drücken der beiden Tasten rückgängig gemacht wird, deren zugeordnete Tastenfunktionen unmittelbar der Tastenfunktion der zweiten Taste benachbart sind.

Ein Ausführungsbeispiel der Erfindung wird im Folgenden anhand einer Zeichnung näher erläutert. Es zeigen:
- FIG 1: einen Tasten-Nummernblock mit einer defekten 1-Taste und
- FIG 2: ein Tasten-Nummernblock nach Verschieben der Tastenfunktion der 1-Taste.

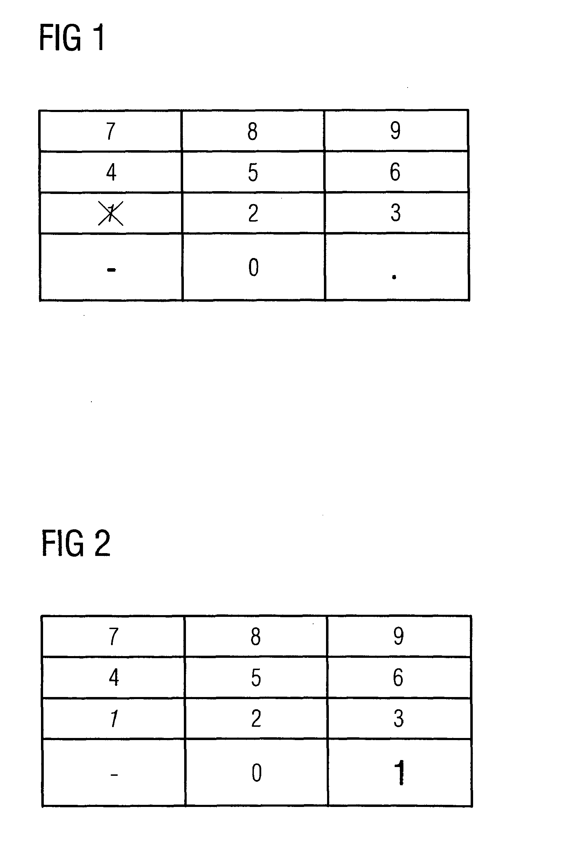

Gemäß der Erfindung kann der Bediener einer Tastatur mit einer defekten Taste selbst die Tastenfunktion verschieben und somit einen Notbetrieb gewährleisten. Ist eine erste Taste z.B. die 1-Taste des Tasten-Nummer-Blocks gemäß FIG 1 defekt, wird bei Verwendung von nur ganzen Zahlen deren Tastenfunktion vorteilhafterweise auf die "."-Taste (rechts unten) als zweite Taste verschoben. Die Tastenfunktionen der Tasten sind an zugeordneten Speicherplätzen eines Speichers abgespeichert. Die Tastenfunktionen der Tasten, deren Verschiebung ermöglicht wird, sind in dem Speicher an den Tasten zugeordneten Speicherplätzen als Ring (9-8-7-6-5-4-3-2-1-". "-0-"-"-9-8-7-6-5-4-) abgespeichert, so dass jede Tastenfunktion benachbart zu beiden Seiten von mindestens einer anderen Tastenfunktion umgeben ist. Ein Kopierbefehl wird durch die beiden zu den unmittelbar benachbarten Tastenfunktion zugehörigen Tasten ausgelöst, d.h. im vorliegenden Beispiel durch Drücken der 2-Taste und der "."-Taste. Die beiden Tasten werden mindestens für eine vorbestimmte Dauer gleichzeitig gedrückt und im Anschluss wird die "."-Taste als Zieltaste gedrückt. Daraufhin übernimmt ein dieser "."-Taste zugeordneter Speicherplatz im Speicher die zu verschiebende Tastenfunktion der 1-Taste. Auf diese Weise erhält man die Tastenbelegung gemäß FIG 2 nach Verschieben der Tastenfunktion der 1-Taste. In entsprechender Weise ist die Tastenfunktion einer beliebigen ersten Taste auf eine zweite Taste der Tastatur zu verschieben.

Um eine Neubeschriftung gemäß der veränderten Tastenbelegung zu vermeiden, wird vorteilhafter Weise zur Beschriftung der Tasten ein Display verwendet, in dem automatisch die Beschriftung der zweiten Taste entsprechend der Verschiebung der Tastenfunktion geändert wird. Besonders einfach lässt sich dies mit einem OLED(**O**rganic **L**ight **E**mitting **D**iode)-Display durchführen.

Um die ursprüngliche Funktionalität nach Beheben z.B. eines Tastendefekts wieder herzustellen, wird die Verschiebung der Tastenfunktion durch Drücken der beiden Tasten rückgängig gemacht, deren zugeordnete Tastenfunktionen unmittelbar der Tastenfunktion der zweiten Taste benachbart sind. Im Beispiel waren dies die 2-Taste und die "."-Taste. Auf diese Art und Weise wird die vorübergehend auf die "."-Taste verschobene Tastenfunktion der 1-Taste wieder auf die 1-Taste zurückkopiert.

## Patentansprüche

1. Verfahren zur Verschiebung einer Tastenfunktion einer ersten Taste einer mit mehreren Tasten versehenen Tastatur, deren Tastenfunktionen an zugeordneten Speicherplätzen eines Speichers abgespeichert sind, auf eine zweite Taste der Tastatur, indem die Tastenfunktion der ersten Taste mit Hilfe einer oder mehrerer anderer Tasten zunächst kopiert und an einen der zweiten Taste zugeordneten Speicherplatz im Speicher eingefügt wird.

2. Verfahren nach Anspruch 1, **dadurch gekennzeichnet, dass** die Tastenfunktionen der Tasten, deren Verschiebung ermöglicht wird, in dem Speicher an den Tasten zugeordneten Speicherplätzen als Ring abgespeichert sind, so dass jede Tastenfunktion benachbart zu beiden Seiten von mindestens einer anderen Tastenfunktion umgeben ist.

3. Verfahren nach Anspruch 2, **dadurch gekennzeichnet, dass** ein Kopierbefehl durch die beiden zu den unmittelbar benachbarten Tastenfunktionen zugehörigen Tasten ausgelöst wird.

4. Verfahren nach Anspruch 3, **dadurch gekennzeichnet, dass** beide Tasten mindestens für eine vorbestimmte Dauer gleichzeitig gedrückt werden.

5. Verfahren nach Anspruch 4, **dadurch gekennzeichnet, dass** im Anschluss die zweite Taste gedrückt wird und daraufhin ein dieser zugeordneter Speicherplatz im Speicher die zu verschiebende Tastenfunktion übernimmt.

6. Verfahren nach einem der vorangehenden Ansprüche, **dadurch gekennzeichnet, dass** zur Beschriftung der Tasten ein Display verwendet wird, und dass mit der Verschiebung der Tastenfunktion die Beschriftung der zweiten Taste geändert wird.

7. Verfahren nach Anspruch 6, **dadurch gekennzeichnet, dass** ein OLED(**O**rganic **L**ight **E**mitting **D**iode)-Display verwendet wird.

8. Verfahren nach einem der vorangehenden Ansprüche, **dadurch gekennzeichnet, dass** die Verschiebung der Tastenfunktion z.B. nach Beheben eines Defekts der ersten Taste durch gleichzeitiges Drücken der beiden Tasten rückgängig gemacht wird, deren zugeordnete Tastenfunktionen unmittelbar der Tastenfunktion der zweiten Taste benachbart sind.
